# EUROPEAN PATENT SPECIFICATION

(11) **EP 3 145 969 B1**
(45) Date of publication and mention of the grant of the patent: **22.12.2021**
(21) Application number: 15759936.6
(22) Date of filing: 18.05.2015
(51) Int. Cl.: C08F 283/00, C08J 3/24, C08J 5/24, C08G 59/14, C08G 59/18, C08G 59/42, C08F 283/01, C08F 283/10, C08F 290/06, C08K 3/00, C08K 3/22, C08L 29/10, C08L 33/08, C08L 63/00

(54) **A METHOD FOR PREPARING FINISHED AND SEMI-FINISHED PRODUCTS SUCH AS PREPREGS BASED ON AN EPOXY RESIN COMPOSITION, AND COMPOSITION THEREFOR**
VERFAHREN ZUR HERSTELLUNG VON ERZEUGNISSEN UND HALBZEUGEN WIE PREPREGS AUF DER BASIS EINER EPOXIDHARZZUSAMMENSETZUNG UND ZUSAMMENSETZUNG DAFÜR
PROCÉDÉ DE PRÉPARATION DE PRODUITS FINIS ET SEMI-FINIS, TELS QUE DES PRÉ-IMPRÉGNÉS BASÉS SUR UNE COMPOSITION DE RÉSINE ÉPOXY ET COMPOSITION À CET EFFET

(30) Priority: 18.05.2014 IT PI20140033
(43) Date of publication of application: 29.03.2017
(73) Proprietor: Nuova Connavi Ricerca e Sviluppo S.R.L., 19020 Bolano (SP) (IT)
(72) Inventor: PAGLIARI, Renzo, I-19125 La Spezia (IT)
(74) Representative: Celestino, Marco
(86) International application number: PCT/IB2015/053660
(87) International publication number: WO 2015/177714

(56) References cited:
- EP-A2- 0 412 588
- US-A- 3 557 246
- US-A- 4 954 304
- None

## Description

### Field of the invention

The present invention relates to a method for preparing semi-finished and finished products of composite materials based on a resin and on an inert material, such as prepregs, syntactic foams, moulding compounds, synthetic marbles, as well as articles manufactured by winding processes and by "tape lay-up" processes. The invention also relates to compositions for preparing said semi-finished and finished products.

### State of the art and technical problems

As well known, composite semi-finished products such as prepregs, which are useful for making high-performance articles, are obtained by impregnating a reinforcing material with a liquid epoxy resin in the presence of an anhydride, in such conditions that the anhydride reacts with the resin in a hardening, i.e. a cross-linking reaction of the resin. The reinforcing material can comprise glass fibres, carbon fibres, aramid fibres or the like.

Similarly, polymer moulding compounds or cast compounds for making high-performance articles are obtained by mixing the epoxy resin and the anhydride with fillers such as calcium carbonate or Alumina Trihydrate, and by causing the resin and the anhydride to react in the same way as above.

Before the hardening, a step is carried out of removing air that is retained within the impregnated material or within the mixture, normally by applying vacuum to the article to be hardened.

In order to obtain a good impregnation or mixing, the epoxy resin must have a viscosity lower than a predetermined value. However, a too low viscosity is not desirable in the operations that are performed after impregnating the fibres or after mixing the fillers, because in such conditions a separation can take place between the resin and the fibres, or between the resin and the fillers, which can cause mechanical instability of the article.

In order to overcome these problems, in the case of the prepregs and, in particular, for aircraft applications, processes have been developed such as the solvent impregnation process, the hot melt process, the partial polymerization process, as described in IT 1277349, for instance. By these techniques, during the polymerization or during a possible heating step, special formworks are required, or other containment means, such as vacuum bags, pressure bags and autoclaves, in order to avoid that the resin leaves the semi-finished product worked due to gravity or other actions. All this increases the production costs and restricts the prepregs to the manufacture of small objects and/or high-value objects.

Moreover, in a filament winding process, the fibres are compressed, which causes the resin to leave the fibres, therefore an excessive fibre content is obtained. Moreover, due to the excessive fluidity of the resin, the articles must be kept turning about a horizontal axis, in order to avoid loss of resin, while it is very difficult to wind about vertical axes or about fixed horizontal axes. This makes it difficult to manufacture articles in a continuous way.

In order to solve these problems, IT 1277349 proposes compositions comprising: an epoxy resin; a radically polymerizable unsaturated reagent that can be polymerized according to a first polymerization reaction; an anhydride that forms an epoxy system with the epoxy resin, i.e. an anhydride adapted to react with the resin in a second polymerization reaction, which can harden the composition; a catalyst for the epoxy system, which assists the second polymerization reaction. In this composition, the radically polymerizable unsaturated reagent has at least one vinyl unsaturation and is selected among acrylates, methacrylates, styrene derivatives, divinylbenzene, divinyl ethers and similar compounds, and is present in an amount set between 3% and 30% by weight with respect to the total amount of the composition.

After the impregnation of the fibres or after forming the mixture with the fillers, the obtained semi-finished product is subjected to visible or UV radiation, in order to trigger the first polymerization reaction. This reaction is completed in a few minutes, at a temperature between room temperature and 80°C, preferably at a radical polymerization temperature close to 50°C, and forms an intermediate resin that is mouldable and easy to be formed, but it is thick enough not to drop away. On the contrary, the hardening reaction of the epoxy resin and the anhydride is much slower: at 80°C, for example, it comes to completion in about 16 hours. Therefore, when the first polymerization reaction is substantially completed, the second one has not practically begun yet, which makes the containment means less important or unnecessary, during the whole step of hardening of the prepregs material or of a different article.

More in detail, and with particular reference to the case of the prepregs manufacture, the radical polymerization reaction can be brought to completion during the pre-impregnation step, forming prepregs in which the resin composition is firmly bound to the substrate.

Therefore, the production of the above-described semi-finished product and articles or the like is assisted by a high resin fluidity, during the step of impregnating the fibres or of mixing the resin with the fillers, and by the high dimensional stability that is obtained by the polymerization reaction involving the radically polymerizable reagent, even since the beginning of the subsequent step of hardening.

Moreover, the use of these compositions makes it possible to reliably predetermine the glass fibre content, especially if this must be particularly low, which improves the fatigue behaviour of the matrix, besides reducing the "oozing" or, more in general, the micro-cracking of the matrix.

More in detail, such compositions make it possible to apply the prepregs material practically in the same way as a double-sided tape, which immediately and firmly sticks to the support or to the layers that have been already put down. This makes it possible to wind on flat or concave surfaces, as well as on vertical mandrels and/or still, i.e. non rotating mandrels.

Moreover, these compositions can be used to make syntactic foams, consisting of resin and hollow microspheres, as well as synthetic marbles and moulding compounds with improved chemical and physical properties and high processability, since the foam can be adapted to complex surfaces that have a short curvature radius, and even to double-curvature surfaces.

However, the compositions of IT 1277349, still have a few drawbacks that should be overcome, some of which depending on the viscosity of the resin. Firstly, it is desirable to further reduce the tendency of the resin to leave the article due to gravity and other forces. This is particularly relevant while impregnating glass fibres, both in the prepregs manufacture and in the filament winding processes, in order to suppress the unevenness of the resin content with respect to the fibre or to the fillers. Moreover, the step of removing air under vacuum from the article being formed, before the hardening, is complicated by the tendency of air bubbles to be retained by the matrix, which is still in the liquid form. It is often necessary to press the article being formed by means of broad knives and similar tools, which requires time and resources, and keeps the workers exposed to the process vapours. Not less important, the service life of the articles based on the compositions of IT 1277349 is generally not longer than twenty-five years. This is a drawback for articles to be exposed to the sun and/or to bad weather, and cannot be accepted for such structural articles as ducts of large hydraulic networks and industrial plants, in which case a service life at least twice the above indicated would be required.

US 3557246 describes a method for making epoxy resin compositions that comprises a crosslinking catalyst and that has a processability time ("pot life", or duration of the mixture, i.e. the time during which a predetermined amount of a resin is still liquid at a prefixed temperature) of about six months or more. Said compositions are still in a non-cross-linked status during this time, and are therefore particularly well-suited to coat large size objects. The method comprises a step of an esterification reaction of a base epoxy resin and of a first olefinically unsaturated anhydride, such as maleic anhydride, without catalysts and in any case in such conditions that the reaction substantially stops when only a monoester is substantially present, which contains a double bond provided by the unsaturated anhydride. The method also comprises a subsequent step of addition of: a vinyl monomer, which is always styrene in the examples; a second anhydride, which has no vinyl unsaturations and cannot therefore react with the vinyl monomer; a vinyl polymerization catalyst such as a peroxide; a radical polymerization inhibitor such as hydroquinone.

If such a composition, containing the monoester, Styrene and the second anhydride along with the catalyst, is heated up to a suitable temperature, an addition reaction occurs between Styrene and the double bond provided by the monoester, which forms a copolymer comprising Styrene units and partially esterified epoxy units, and further esterification reactions also take place involving the epoxy groups and the hydroxyl groups of the copolymer, due to the unsaturated anhydride, which forms crosslinks between the epoxy units and, therefore, between the polymer chains.

US 4,954,304 discloses a preparation for prepregs for making printed circuit boards.

EP 0 412 588 A2 discloses a preparation of prepregs for large surfaces, like walls of ships, and also it faces the problem of leaking of the prepreg. It provides a liquid epoxy resin, a monomer reactive with the epoxy resin and a hardening catalyst for the epoxy resin, an unsaturated polyester, a monomer reactive with the unsaturated polyester and a hardening catalyst for the unsaturated polyester. The catalyst for the unsaturated polyester is a first catalyst that has a working range below 40°C and the catalyst for the epoxy resin is a second catalyst that has a working range above 40°C.

### Summary of the invention

It is therefore a feature of the present invention to provide a method for preparing semi-finished and finished products of a composite material based on an epoxy resin and an inert material, such as prepregs, syntactic foams, moulding compounds, synthetic marbles, as well as articles manufactured by a filament winding process, in which the resin has a lower tendency, with respect to the prior art, to escape from the article due to gravity or to other forces.

It is a particular feature of the invention to provide such a method and such compositions that make it possible to control the viscosity of the epoxy resin more accurately than the prior art compositions, in order to assist the steps of impregnating the fibres and/or of mixing the resin with the fillers.

It is also a particular feature of the present invention to provide such a method and such compositions that make it possible to control the resin/fibre ratio more accurately than in the prior art, in particular, in the filament winding techniques.

It is another feature of the invention to provide such a method and such compositions that make it easier to remove air embedded in the article, before the hardening, with respect to the prior art.

It is also a feature of the invention to provide such a method and such compositions that provide products whose service life is remarkably longer than the service life of the articles obtained from the prior art compositions.

These and other objects are achieved by a method for preparing composite semi-finished products comprising an epoxy resin and a substrate, such as prepregs, syntactic foams, moulding compounds, synthetic marbles, the method comprising the steps of:
- prearranging a container;
- feeding a base epoxy resin into the container;
- feeding into the container an anhydride cross-linking agent configured for reacting with the base epoxy resin to form a cross-linked epoxy resin;
- feeding an amount of Titanium dioxide into the container;
- feeding an amount of a radically polymerizable unsaturated reagent having at least one vinyl unsaturation into the container;
- feeding an epoxy resin catalyst into the container, the epoxy resin catalyst configured for catalysing a reaction between the base epoxy resin and the anhydride cross-linking agent,
so as to form a composition based on the base epoxy resin within the container, wherein the amount of Titanium dioxide is smaller than 16% by weight with respect to the total weight of the composition,
said method comprising subsequent steps of:
- bringing said composition into contact with a substrate selected between a plurality of reinforcing fibres and a mass of fillers, and
- heating the composition up to a radical polymerization temperature of the unsaturated radically polymerizable reagent, whereby a step of a radical polymerization of the unsaturated radically polymerizable reagent occurs, so as to stabilize the composition in a semi-finished product comprising the substrate and the composition in a gel state.

During the step of bringing the composition into contact with a substrate, and during the subsequent step of a radical polymerization, the substrate, which may consist of short fibres or of continuous fibres, or of fillers, is uniformly wetted with the resin composition. Therefore, these steps comprise the operation of impregnating a mat of reinforcing fibres when preparing the prepreg, the operation of wetting the continuous fibres before the filament winding, the operation of mixing the composition with various fillers, as in the production of syntactic foams, moulding compounds and synthetic marbles.

Before the step of bringing the composition into contact with a substrate, a step can be provided of transferring a part of the composition into a container where a the composition is caused to come into contact with the substrate.

In particular, the container where the contact is caused is an impregnation tank, and a step is provided of feeding a mat of reinforcing fibres by causing it to travel through the composition, such that a semi-finished product is obtained in the form of a prepreg mat, i.e. of a stabilized prepreg.

Preferably, the radical polymerization temperature is set between 40°C and 75°C, in particular it is set between 40 and 60°C, more in particular, it is set between 45 and 55°C, even more in particular, the radical polymerization temperature is about 50°C.

The step of bringing the composition into contact with a substrate, in particular the step of impregnation, is advantageously carried out while controlling the room temperature and the relative humidity. Advantageously, a gelling control step is provided, preferably by locally cutting the surface of the prepreg mat.

As in the case of the resins of IT 1277349, the mats of fibres used for making prepreg mats can contain fibres of E-glass, R-glass, S-glass and other types of glass, aramid fibres, carbon fibres, fibres based on other polymers type polyethylene, polypropylene, or natural fibres.

The semi-finished product can be packaged and stored to be sold or used a certain time after the production, or can be used immediately thereafter to make a final product.

In particular, in the latter case, as it is known from the technique of manufacturing articles starting from prepreg mats, a step can be provided of arranging prepreg mats into a mould, in particular, of arranging them upon one another until the thickness and the shape of a final product is obtained, while heating the prepreg mats at a predetermined temperature increase rate, up to a predetermined process temperature, which can be set between 75°C and 115°C. A final vacuum stabilization step can be performed, or intermediate vacuum stabilization steps, when a predetermined number of layers of mats, for instance 6 or 7 layers of mats, have been laid down, in order to remove air from the article being formed.

The above-described objects are also attained by a composition for preparing composite semi-finished products comprising an epoxy resin and a substrate, such as a prepreg material, syntactic foams, moulding compounds, synthetic marbles, comprising:
- a base epoxy resin;
- an anhydride cross-linking agent configured for reacting with the base epoxy resin to form a cross-linked epoxy resin;
- an amount of Titanium dioxide;
- an amount of a radically polymerizable unsaturated reagent having at least one vinyl unsaturation;
- an epoxy resin catalyst, the epoxy resin catalyst configured for catalysing a reaction between the base epoxy resin and the anhydride cross-linking agent,

wherein the amount of Titanium dioxide is smaller than 16% by weight with respect to the total weight of the composition,
said radically polymerizable unsaturated reagent configured in such a way that, by mixing the composition with a substrate selected between a plurality of reinforcing fibres and a mass of fillers at a radical polymerization temperature, the semi-finished product is obtained comprising the substrate and the composition in a gel state.

In particular, the amount of Titanium dioxide is set between 8% and 14% by weight with respect to the total weight of the composition, more in particular, the amount of Titanium dioxide is about 10% of the total weight of the composition.

Advantageously, Titanium dioxide is Rutile Titanium dioxide.

A first advantage of using Titanium dioxide in the composition is to allow a more reliable control of the exothermic hardening reaction, which is normally carried out under UV radiation exposure of the article. This is possible because Titanium dioxide absorbs an important portion of the UV radiations, and the energy supplied this way is then at least in part gradually transferred to the matrix consisting of the composition and the substrate. For this reason, the temperature of the matrix is much slower and more uniform than in the prior art. In other words, it is less probable that the temperature increases quickly in some points of the matrix, i.e. of the article being formed, due to the reaction heat, and it is therefore less probable that "hot spots" form where the temperature is higher than in the rest of the matrix. Therefore, the control of the cross-linking reaction becomes easier, and it becomes less probable that the temperature locally exceeds higher limits above which the mechanical properties would be heterogeneous, which could form fragile and crack-triggering regions. With the corresponding compositions of cited prior art, containing the components listed in claims 1 and 17, except for Titanium dioxide, the temperature that must be uniformly maintained through the matrix during the second reaction is normally set between 80 and 90°C, and the maximum tolerable local temperature is about 120°C, beyond which the reaction can run away due to the heat produced by the exothermic hardening reaction.

A second advantage of Titanium dioxide is to improve the stability of the matrix consisting of the composition and of the fibres or the fillers, in other words the resin is less prone to escape from the article being formed. This is possible because Titanium dioxide increases the composition viscosity with respect to the prior art, in particular with respect to the compositions of IT 1277349, as the measurement hereinafter confirm.

More in detail, the higher composition viscosity and the better stability of the matrix simplify the steps carried out after the impregnation or the mixing. In particular, containment means are less required, or no longer necessary for the article being formed, before and at the beginning of the hardening step, i.e. of the cross-linking reaction.

Another consequence of the better stability of the matrix comprising the compositions of the invention is that the mats stick more firmly to one another and therefore the relative position of the mats is more stable, before the cross-linking reaction, in parts of an article that have an unfavourable geometry, such as the concave face of a vault or of an arch.

A third advantage of Titanium dioxide, still due to said higher viscosity, is to assist the extraction of the air retained by the matrix, in particular when manufacturing an article from prepreg mats. In fact, when the mats are being laid on one another, air bubbles remain unavoidably within the matrix formed by the mats. The bubbles must be removed, since otherwise they would form mechanically weak points in the article, where an early or unexpected break may take place. The air bubbles removal is normally carried out under vacuum, once the mats have been laid down, or also at intermediate steps of this operation, which is the case when manufacturing thick articles. Vacuum bags or autoclaves are used to this purpose, which is more difficult in the case of very large articles such as hull portions and the like. The higher composition viscosity makes air bubbles less prone to return into the composition during the removal. Most likely, this is possible because the porosities of the matrix close more quickly in a vacuum environment. Moreover, unlike the corresponding prior art compositions, it is no longer necessary to press the matrix by mechanical means such as broad knives, in order to assist air bubbles ejection. This makes the manufacture process less time-consuming and less expensive.

Further advantages of the use of Titanium dioxide are the improvement of some mechanical properties, and the stability in the time of these mechanical properties, with respect to the hardened resins obtained from the corresponding prior art compositions, as the hereinafter mechanical tests show.

In particular, specimens made of prepreg mats obtained from compositions according to the invention show an elasticity modulus and a hardness even remarkably higher than specimens obtained from corresponding prior art compositions, in which Titanium dioxide is missing, while the other components are present in the same proportions. In particular, Barcol hardness improvements have been shown up to 5%.

Moreover, the articles made of prepreg mats, syntactic foams and synthetic marbles produced using the compositions according to the invention keeps their mechanical properties and chemical resistance substantially unchanged for a time remarkably longer than the articles made using corresponding prior art compositions. In particular, a clearly higher hardness increase is observed by exposition to UV radiations. In particular, Barcol hardness increases have occurred of even about 12% after exposition to UV radiations for a time equivalent to 40 years of exposition to sunlight. A similar aging behaviour is observed for the ultimate tensile strength, whereas the elasticity modulus is substantially unchanged. Therefore, by the compositions according to the invention, articles can be made whose service life is at least twice the service life of articles obtained from IT 1277349 resins, without depressing the mechanical properties or even improving the hardness.

From another point of view, articles can be obtained by the invention that have a predetermined service life without requiring expensive protective treatments such as painting and the like.

For example, tubes can be manufactured at a low cost, to be used in water distribution networks or pipelines for other purposes, in such large works as aqueducts or industrial plants, as well as middle and high voltage boxes for power plants and networks, which have a service life longer enough to remarkably reduce the rate of replacement of such components.

The composition is formulated so as to be liquid at a predetermined impregnation or mixing temperature, for example at a temperature above 30°C, in particular at a temperature above 40°C, more in particular, at a temperature above 60°C, in order in order to allow the reinforcing fibres to be impregnated or the fillers to be mixed at room temperature or at a higher temperature, up to 60°C. One of the two components, selected between the base epoxy resin and the anhydride cross-linking agent, can even be solid, provided the composition is liquid at the impregnation or mixing temperature. Preferably, the base epoxy resin and the anhydride cross-linking agent are both liquid at the temperature at which the fibres are impregnated or the fillers are mixed with the composition.

Advantageously, the base epoxy resin is selected from the group consisting of:
- Bisphenol A - diglycidyl ether;
- Bisphenol F - diglycidyl ether;
- Low molecular weight novolac diglycidyl ethers;
- Tetrahydro Bisphenol A - diglycidyl ether;
- Tetrabromo Bisphenol A - diglycidyl ether;
- Vinylcyclohexandioxide;
- bis-(2,3-Epoxy cyclopentyl ether);
- a diglycidyl ester of Hexahydrophthalic acid;
- an epoxy resin having two epoxy groups;
- a mixture thereof.

Preferably, the base epoxy resin is a diglycidyl ether or a mixture of diglycidyl ethers.

The radically polymerizable unsaturated reagent may have a single unsaturation. In particular, in the case of an ester, the radically polymerizable reagent is selected among the esters of Acrylic acid and/or Methacrylic acid.

In particular, the radically polymerizable unsaturated reagent is selected from the group consisting of:
- Methyl methacrylate;
- Ethyl methacrylate;
- Butyl methacrylate;
- Benzyl methacrylate
- 1,4-Butandiol methacrylate;
- Methyl acrylate;
- Glycidyl acrylate;
- 2-(2-Ethoxyethoxy) ethyl acrylate;
- a combination thereof.

In particular, it is observed that the 2-(2-Ethoxyethoxy) ethyl acrylate causes a structure like a protective film to be formed on the epoxy matrix, which protects the anhydride of the composition against moisture. This provides an enhanced chemical stability and also mouldability and ease formability to the matrix, and therefore to the article being formed, in the case of prepreg articles and of syntactic foams. Similar advantages are obtained in filament winding processes, because the composition is not prone to escape from the matrix in work during the winding.

The polymerization of acrylates that have a single unsaturation yields a composition comprising linear polymer chains. In the moulding processes, the formulations in which most chains are linear chains formed by radical polymerization, i.e. by the first polymerization, give materials that melt at a relatively low temperature and that flow freely within the moulds.

The radically polymerizable reagent with a single unsaturation can also be α-Methylstyrene.

In addition, or as an alternative, the radically polymerizable reagent has two unsaturations. In particular, the radically polymerizable reagent, which is adapted to react with the intermediate resin, can comprise a compound selected from the group consisting of:
- Divinylbenzene;
- Divinyl ethers;
- Triethylene glycol divinyl ether;
- Bisphenol A ethoxylate diacrylate;
- 1,4, Cyclohexanedimethanol divinyl ether;
- Divinylbenzene diacrylates obtained by a reaction of a monomer such as Acrylic acid with a diamine or by a reaction of monomers such as derivatives of Acrylic acid containing epoxy or amine reactive groups;
- a combination thereof.

The polymerization of compounds that have two unsaturations yelds a ramified polymer, instead of a linear polymer. The diacrylates can be obtained by reacting monoacrylates such as glycidyl acrylate with monoacrylates such as Methacrylamide, i.e. acrylates containing an epoxy function or an amine-like function. The reaction between the epoxy units and the amine unit links two molecules together, thus creating a diacrylate. The amount of acrylate molecules having an amine function can be small, since this substance works also as catalyst for the omopolymerization reaction involving the epoxy groups of the acrylates that contain epoxy functions. Also this reaction causes the production of diacrylates that are useful for cross linking the acrylates.

In an exemplary embodiment, the radically polymerizable reagent comprises glycidyl acrylate, and the composition also comprises a diamine, in particular selected from the group consisting of: Ethylenediamine and hexamethylenediamine. In this case, the diamine reacts with two molecules of Glycidyl acrylate creating a diacrylate.

In an exemplary embodiment, the radically polymerizable reagent comprises a mixture of acrylates and diacrylates that has a predetermined weight ratio of acrylates to diacrylates set between 0 and 1.

Advantageously, the radically polymerizable reagent comprises 2-(2-Ethoxyethoxy) ethyl acrylate and Bisphenol A ethoxylate diacrylate at a predetermined ratio. These compositions provides hardness and flexibility at the same time to the article.

In an exemplary embodiment, the radically polymerizable reagent comprises an acrylic compound, in particular selected among methyl methacrylate, butyl methacrylate, benzyl methacrylate, or a combination thereof, and a divinyl ether, in particular Triethylene glycol divinyl ether, in a predetermined ratio, the divinyl ether adapted to react with the acrylic compound in a co-polymerization reaction, in such a way that the step of radical polymerization comprises a step of a co-polymerization reaction of the divinyl ether with the acrylic compound. In particular, the divinyl ether can be selected among Triethylenglycol divinyl ether, 1,4 Cyclohexanedimethanol divinyl ether.

The ratio between the acrylic reagent and the divinyl ether determinates the cross-linking density. Without divinyl ether, the radical polymerization generates a composition comprising a linear and thermoplastic polymer, which allows creating semi-finished product that can be easily melted. In the presence of divinyl ether, the radical polymerization generates a composition comprising a polymer with a three-dimensional network, which is thermally stable up to the temperature at which the second polymerization occur between the epoxy intermediate resin and the anhydride cross-linking agent, which causes cross-linking, i.e. hardening.

In an exemplary embodiment, the radically polymerizable reagent comprises Styrene and a divinylbenzene in a predetermined ratio, the divinylbenzene arranged to react with Styrene in a co-polymerization reaction, in such a way that the step of a radical polymerization comprises a step of a co-polymerization reaction of the divinylbenzene with Styrene. Without Divinylbenzene, this polymerization yields polystyrene linear chains, which would provide a thermolabile strengthening effect. In the presence of divinylbenzene, the first polymerization provides a network composition comprising a polymer with a three-dimensional network that provides higher and thermostable strength.

The radical polymerization can be carried out by exposure to light, i.e. photoinitiation, or by conventional catalysis systems, in particular with systems comprising a peroxide and cobalt salts, or comprising amine.

Preferably, the anhydride cross-linking agent is selected from the group consisting of:
- α-Methylphthalic anhydride;
- α-Methyltetrahydrophthalic anhydride;
- Methylnadic anhydride;
- a combination of the above anhydrides.

A further anhydride cross-linking agent can also be provided selected from the group consisting of:
- Phthalic anhydride;
- Tetrahydrophthalic anhydride;
- Hexachloroendomethylenetetrahydrophthalic anhydride;
- Pyromellitic anhydride.

The amount of the further anhydride cross-linking agent is selected in such a way that the composition is liquid at the impregnation temperature or at the mixing temperature, responsive to the process to be carried out.

In an exemplary embodiment, the base epoxy resin is Bisphenol A - diglycidyl ether, and the anhydride cross-linking agent is Methylnadic anhydride.

The epoxy resin catalyst can be a conventional catalyst that can catalyze a reaction between an epoxy resin and an anhydride.

With the composition according to the invention, syntactic foams can also be obtained, which are used especially as core portions in sandwich structures, and as floating bodies for underwater applications.

### Examples

The invention will be now shown with the description of examples of particular compositions, exemplifying but not limitative. These compositions have rheological properties suitable for making prepreg mats, as well as syntactic foams, moulding compounds, synthetic marbles.

Example 1 - Composition, parts by weight:
- base epoxy resin: Bisphenol A-diglycidyl ether, epoxide equivalent weight 185: 40,1;
- radically polymerizable reagent:
   - Diacrylate obtained by a reaction of diglycidyl acrylate with Ethylenediamine: 1,0;
   - Methyl methacrylate: 5,9;
- radical reaction catalyst: 1,7;
- anhydride cross-linking agent: Methylnadic anhydride: 40,5;
- epoxy resin catalyst: 0,8;
- Rutile Titanium dioxide: 10.

Example 2 - Composition, parts by weight:
- base epoxy resin: Bisphenol A-diglycidyl ether, epoxide equivalent weight 185: 40,1;
- radically polymerizable reagent:
   - Diacrylate of bisphenol-A: 3,4;
   - Triethylenglycol-divinyl ether: 3,5;
- radical reaction catalyst: 1,7;
- anhydride cross-linking agent: Methylnadic anhydride: 40,5;
- epoxy resin catalyst: 0,8;
- Rutile Titanium dioxide: 10.

Example 3 - Composition, parts by weight:
- base epoxy resin: Bisphenol A-diglycidyl ether, epoxide equivalent weight 185: 39,5;
- radically polymerizable reagent:
   - Styrene: 7;
   - Divinylbenzene: 3;
- radical reaction catalyst: 1,7;
- anhydride cross-linking agent: Methylnadic anhydride: 38,0;
- epoxy resin catalyst: 0,8;
- Rutile Titanium dioxide: 10.

Example 4 - Composition, parts by weight:
- base epoxy resin: Bisphenol A-diglycidyl ether, epoxide equivalent weight 185: 39,5;
- radically polymerizable reagent:
   - 2-(2-Ethoxyethoxy) ethyl acrylate: 3;
   - Bisphenol A ethoxylate diacrylate: 7;
- anhydride cross-linking agent: Methylnadic anhydride: 38,0;
- epoxy resin catalyst: 0,8;
- Rutile Titanium dioxide: 10.

Without providing any limitation, the main raw materials (base epoxy resin, anhydride cross-linking agent, radically polymerizable reagent) cited in the Examples 1 to 4 can be substituted, independently to one another, by selecting them as indicated hereinafter.

The base epoxy resin can be selected from the group consisting of:
- Bisphenol A - diglycidyl ether;
- Bisphenol F - diglycidyl ether;
- low molecular weight novolac diglycidyl ethers;
- Tetrahydro Bisphenol A - diglycidyl ether;
- Tetrabromo Bisphenol A - diglycidyl ether;
- Vinylcyclohexandioxide;
- bis-(2,3 Epoxy cyclopentyl ether);
- Diglycidyl ester of Hexahydrophthalic acid;
- a mixture thereof,
wherein the composition, without or in the presence of the anhydride cross-linking agent, is liquid at the impregnation temperature or at the mixing temperature.

The anhydride cross-linking agent can be selected from the group consisting of:
- α-Methylphthalic anhydride;
- α-Methyltetrahydrophthalic anhydride;
- Methylnadic anhydride as liquid anhydrides. The following anhydrides can be added, provided the system is liquid tehreafter:
   - Phthalic anhydride;
   - Tetrahydrophthalic anhydride;
   - Hexachloro endomethylenetetrahydrophthalic anhydride;
   - Pyromellitic anhydride.

The radically polymerizable unsaturated reagent can be selected from the group consisting of:
- a compound that has a single unsaturation, selected from the group consisting of:
   - Methyl methacrylate;
   - Ethil methacrylate;
   - 1,4 Butandiol methacrylate;
   - Methyl acrylate;
   - 2-(2-Ethoxyethoxy) ethyl acrylate;
   - Glycidyl acrylate and other esters of Acrylic or Methacrylic acid;
   - α-Methylstyrene.
- a compound that has two unsaturations, selected from the group consisting of:
   - Triethylene glycol divinyl ether;
   - 1,4 Cycloehexane dimethanol divinyl ether;
   - Bisphenol A ethoxylate diacrylate;
   - a divinylbenzene diacrylate obtained by a reaction of a reagent such as Acrylic acid with a diamine, or by a reaction of a reagent, such as derivatives of Acrylic acid containing epoxy or amine reactive groups.

### Composition viscosity

The viscosity of a composition containing 10% weight Titanium dioxide, according to the invention, and of a composition without Titanium dioxide having a formulation corresponding to the first composition, i.e. in which the other components are present in the same proportions. The results of the measurement, made by the Ford Cup method, ASTM D1200, are the following:
- composition without TiO₂: viscosity time: 90 seconds;
- composition containing 10% weight TiO₂: viscosity time: 135 seconds.

### Mechanical Characterization

Two fiberglass reinforced plastic composite monolithic boards have been prepared that measured 500 mm by 500 mm and whose thickness was set between 1,8 and 2,2 mm, each comprising epoxy resin and three fiberglass reinforcement layers. The resin of a first board matched the composition of example 3, while the resin of a second board was a composition without Titanium dioxide, while the other components had the same relative proportions as in example 3.

Two samples have been obtained from each board, one of which has been subjected to accelerated ageing by prolonged exposure to UV radiations, according to ASTM G 151-10. The exposure lasted 750 hours, i.e. about 30 days, in operating conditions equivalent to 40 years ageing. The other of the two samples from each board has been used as such, i.e. it has not been subjected to accelerated ageing.

Tensile properties have been measured, namely ultimate tensile strength R and tensile modulus of elasticity Eₜ, using two groups of five specimens, each obtained from a respective board, with reference to ASTM D 638-10.

Barcol hardness has been measured using two groups often specimens, each obtained from a respective board, with reference to ASTM D 2583-13.

The table below shows the average values of Barcol hardness, ultimate tensile strength R and tensile modulus of elasticity Eₜ measured for each of the above mentioned groups of specimens.

**Table 1 ― Mechanical features of specimens obtained from a composition according to the invention and from a corresponding prior art composition**

| Condition of the sample | Board from composition of IT 1277349 | | | Board from composition according to the invention | | |
|---|---|---|---|---|---|---|
| | Barcol Hardness | R (Mpa) | Eₜ (Mpa) | Barcol Hardness | R (Mpa) | Eₜ (Mpa) |
| As such | 61 | 322 | 22402 | 64 | 263 | 22374 |
| Aged | 61 | 355 | 22529 | 72 | 282 | 22920 |

The board obtained starting from the resin composition according to the invention, not aged, displays a Barcol hardness value about 5% higher than the one obtained from the prior art corresponding composition, which does not contain Titanium dioxide. After an aging treatment equivalent to 40 years of exposure to the outside environment, the Barcol hardness value of the board obtained from the composition according to the invention is even 18% higher than the hardness of the board obtained from the corresponding prior art composition. With time, an increase of about 12% of the initial value is observed in the board obtained from the composition according to the invention, while the Barcol hardness of the article according to the prior art remains unchanged.

The board obtained starting from the resin composition according to the invention that has not received the aging treatment, shows a tensile ultimate strength R lower than the value obtained in the case of the corresponding prior art composition, which did not contain Titanium dioxide. However, after an aging treatment equivalent to 40 years of exposure to the outside environment, the board obtained by the composition according to the invention displays an increase of the tensile ultimate strength R of about 7%, clearly higher than the 4% "recovery" of the board obtained from the prior art resin.

The board obtained starting from the resin composition according to the invention that has not received the aging treatment shows a tensile modulus of elasticity Eₜ that is comparable to the value obtained in the case of the corresponding prior art composition, which did not contain Titanium dioxide. After an aging treatment equivalent to 40 years of exposure to the outside environment, the increase of the value of the elasticity modulus of tension Eₜ of the board obtained from the composition according to the invention is slightly lower than 2% with respect to the increase of the value obtained in the case of the prior art resin, which corresponds to an increase of about the 2,5% with respect to initial value.

Characterization tests have been carried out of boards made with the compositions of the examples 1, 2 and 4, as well as of boards made by corresponding formulations without Titanium dioxide, and results were obtained similar to what is contained in the above table.

The foregoing description of particular exemplary compositions of the invention will so fully reveal the invention according to the conceptual point of view, so that others, using the prior art, will be able to modify and/or adapt in various applications such particular compositions without further research and without parting from the invention and, accordingly, it is meant that such adaptations and modifications will have to be considered as equivalent to these particular compositions. The means and the materials to realise the different functions described herein could have a different nature without, for this reason, departing from the field of the invention. It is to be understood that the phraseology or terminology that is employed is for the purpose of description and not of limitation.

## Claims

1. A method for preparing composite semi-finished products comprising an epoxy resin and a substrate, such as prepregs, syntactic foams, moulding compounds, synthetic marbles, said method comprising the steps of:
- prearranging a container;
- feeding a base epoxy resin into said container;
- feeding into said container an anhydride cross-linking agent configured for reacting with said base epoxy resin to form a cross-linked epoxy resin;
- feeding an amount of Titanium dioxide into said container;
- feeding an amount of a radically polymerizable unsaturated reagent having at least one vinyl unsaturation into said container;
- feeding an epoxy resin catalyst into said container, said epoxy resin catalyst configured for catalysing a reaction between said base epoxy resin and said anhydride cross-linking agent,
so as to form a composition based on said base epoxy resin within said container,
wherein said amount of Titanium dioxide is smaller than 16% by weight with respect to the total weight of said composition,
said method comprising subsequent steps of:
- bringing said composition into contact with a substrate selected between a plurality of reinforcing fibres and a mass of fillers, and
- heating said composition up to a radical polymerization temperature of said radically polymerizable unsaturated reagent, whereby a step of a radical polymerization of said radically polymerizable unsaturated reagent occurs, so as to stabilize said composition in a semi-finished product comprising said substrate and said composition in a gel state.

2. The method according to claim 1, wherein said radically polymerizable unsaturated reagent comprises an acrylic compound and a divinyl ether in a predetermined ratio, and said step of a radical polymerization comprises a step of a co-polymerization reaction of said divinyl ether with said acrylic compound,
in particular said divinyl ether comprises Triethylene glycol divinyl ether.

3. The method according to claim 1, wherein said radically polymerizable unsaturated reagent comprises Styrene and a divinylbenzene in a predetermined ratio, and said step of a radical polymerization comprises a step of a co-polymerization reaction of said divinylbenzene with said Styrene.

4. The method according to claim 1, wherein said epoxy resin is Bisphenol A
- diglycidyl ether, said anhydride cross-linking agent comprises Methylnadic anhydride, and said radically polymerizable unsaturated reagent is obtained by a reaction of Glycidyl acrylate with Ethylenediamine.

5. The method according to claim 1, wherein, before said step of bringing into contact, a step is provided of transferring a part of said composition into a container where said composition is brought into contact with said substrate,
in particular said container where said contact is caused is an impregnation tank, and a step is provided of feeding a mat of reinforcing fibres by causing it to travel through said composition, so as to obtain said semi-finished product in the form of a prepreg mat, i.e. of a stabilized prepreg.

6. The method according to claim 1, wherein said radical polymerization temperature is set between 40°C and 75°C, in particular between 40 and 60°C, more in particular, between 45 and 55°C, even more in particular, said radical polymerization temperature is about 50°C.

7. A composition for preparing composite semi-finished products comprising an epoxy resin and a substrate, such as a prepreg material, syntactic foams, moulding compounds, synthetic marbles, said composition including:
- a base epoxy resin;
- an anhydride cross-linking agent configured for reacting with said base epoxy resin so as to form a cross-linked epoxy resin;
- an amount of Titanium dioxide;
- an amount of a radically polymerizable unsaturated reagent having at least one vinyl unsaturation;
- an epoxy resin catalyst, said epoxy resin catalyst configured for catalysing a reaction between said base epoxy resin and said anhydride cross-linking agent,
wherein said amount of Titanium dioxide is smaller than 16% by weight with respect to the total weight of said composition,
said radically polymerizable unsaturated reagent configured in such a way that, by mixing said composition with a substrate selected between a plurality of reinforcing fibres and a mass of fillers at a radical polymerization temperature, said semi-finished product is obtained comprising said substrate and said composition in a gel state.

8. The composition according to claim 7, wherein said amount of Titanium dioxide is set between 8% and 14% by weight with respect to the total weight of said composition,.
in particular said amount of Titanium dioxide is about 10% of the total weight of said composition.

9. The composition according to claim 7, wherein said radically polymerizable unsaturated reagent is a compound that has only one unsaturation, and that is selected among the esters of Acrylic acid and/or Methacrylic acid.

10. The composition according to claim 7, wherein said radically polymerizable unsaturated reagent is selected from the group consisting of:
― Methyl methacrylate;
― Ethyl methacrylate;
― Butyl methacrylate;
― Benzyl methacrylate
― 1,4-Butandiol methacrylate;
― Methyl acrylate;
― Glycidyl acrylate;
― 2-(2-Ethoxyethoxy) ethyl acrylate;
― a combination thereof.

11. The composition according to claim 7, wherein said radically polymerizable unsaturated reagent is a compound that has two unsaturations and is selected from the group consisting of:
― Divinylbenzene;
― divinyl ethers;
― Triethylene glycol divinyl ether;
― Bisphenol A ethoxylate diacrylate;
― 1,4, Cyclohexanedimethanol divinyl ether;
― Divinylbenzene diacrylates obtained by a reaction of an Acrylic acid with a diamine or by a reaction of an Acrylic acid containing epoxy or amine reactive groups;
― a combination thereof.

12. The composition according to claim 7, wherein said radically polymerizable unsaturated reagent comprises Styrene and a divinylbenzene in a predetermined ratio, said divinylbenzene configured for reacting with Styrene in a co-polymerization reaction.

13. The composition according to claim 7, wherein said base epoxy resin is selected from the group consisting of:
― Bisphenol A - diglycidyl ether;
― Bisphenol F - diglycidyl ether;
― low molecular weight novolac diglycidyl ethers;
― Tetrahydro Bisphenol A - diglycidyl ether;
― Tetrabromo Bisphenol A - diglycidyl ether;
― Vinylcyclohexandioxide;
― bis-(2,3-Epoxy cyclopentyl ether);
― a Diglycidyl ester of Hexahydrophthalic acid;
― an epoxy resin having two epoxy groups;
― a mixture thereof.

14. The composition according to claim 7, wherein said anhydride cross-linking agent is selected from the group consisting of:
― α-Methylphthalic anhydride;
― α-Methyltetrahydrophthalic anhydride;
― Methylnadic anhydride;
― a combination of the above anhydrides.

15. The composition according to claim 14, wherein a further anhydride cross-linking agent is provided selected from the group consisting of:
― Phthalic anhydride;
― Tetrahydrophthalic anhydride;
― Hexachloroendomethylenetetrahydrophthalic anhydride;
― Pyromellitic anhydride.

## Patentansprüche

1. Verfahren zur Herstellung von halbfertigen Verbundprodukten, umfassend ein Epoxidharz und ein Substrat, wie Prepregs, syntaktische Schäume, Formmassen, synthetische Marmore, wobei das Verfahren die folgenden Schritte umfasst:
― Vorbereiten eines Behälters;
― Zuführen eines Basisepoxidharzes in den Behälter;
― Zuführen eines Anhydrid-Vernetzungsmittels in den Behälter, das konfiguriert ist, um mit dem Basisepoxidharz zu reagieren, um ein vernetztes Epoxidharz zu bilden;
― Zuführen einer Menge an Titandioxid in den Behälter;
― Zuführen einer Menge eines radikalisch polymerisierbaren ungesättigten Reagens, das zumindest eine Vinylungesättigtheit aufweist, in den Behälter;
― Zuführen eines Epoxidharzkatalysators in den Behälter, wobei der Epoxidharzkatalysator konfiguriert ist, um eine Reaktion zwischen dem Basisepoxidharz und dem Anhydrid-Vernetzungsmittel zu katalysieren,
um eine Zusammensetzung basierend auf dem Basisepoxidharz innerhalb des Behälters zu bilden,
wobei die Menge an Titandioxid kleiner als 16 Gewichts-% in Bezug auf das Gesamtgewicht der Zusammensetzung ist,
wobei das Verfahren folgende Schritte umfasst:
― Kontaktieren der Zusammensetzung mit einem Substrat, das aus einer Vielzahl von Verstärkungsfasern und einer Masse von Füllstoffen ausgewählt ist, und
― Erwärmen der Zusammensetzung auf eine radikalische Polymerisationstemperatur des radikalisch polymerisierbaren ungesättigten Reagens, wodurch ein Schritt einer radikalischen Polymerisation des radikalisch polymerisierbaren ungesättigten Reagens auftritt, um die Zusammensetzung in einem halbfertigen Produkt zu stabilisieren, welches das Substrat und die Zusammensetzung in einem Gelzustand umfasst.

2. Verfahren nach Anspruch 1, wobei das radikalisch polymerisierbare ungesättigte Reagens eine Acrylverbindung und einen Divinylether in einem vorbestimmten Verhältnis umfasst und der Schritt einer radikalischen Polymerisation einen Schritt einer Copolymerisationsreaktion des Divinylethers mit der Acrylverbindung umfasst,
insbesondere der Divinylether Triethylenglykoldivinylether umfasst.

3. Verfahren nach Anspruch 1, wobei das radikalisch polymerisierbare ungesättigte Reagens Styrol und ein Divinylbenzol in einem vorbestimmten Verhältnis umfasst und der Schritt einer radikalischen Polymerisation einen Schritt einer Copolymerisationsreaktion des Divinylbenzols mit dem Styrol umfasst.

4. Verfahren nach Anspruch 1, wobei das Epoxidharz Bisphenol A-diglycidylether ist, das Anhydrid-Vernetzungsmittel Methylnadinsäureanhydrid umfasst und das radikalisch polymerisierbare ungesättigte Reagens durch eine Reaktion von Glycidylacrylat mit Ethylendiamin erhalten wird.

5. Verfahren nach Anspruch 1, wobei vor dem Schritt des Kontaktierens ein Schritt des Überführens eines Teils der Zusammensetzung in einen Behälter bereitgestellt ist, in dem die Zusammensetzung mit dem Substrat in Kontakt gebracht wird,
wobei insbesondere der Behälter, in dem der Kontakt bewirkt wird, ein Imprägniertank ist, und ein Schritt des Zuführens einer Matte aus Verstärkungsfasern bereitgestellt ist, indem bewirkt wird, dass sie sich durch die Zusammensetzung bewegt, um das halbfertige Produkt in der Form einer Prepreg-Matte zu erhalten, d. h. aus einem stabilisierten Prepreg.

6. Verfahren nach Anspruch 1, wobei die radikalische Polymerisationstemperatur eingestellt ist zwischen 40 °C und 75 °C, besonders zwischen 40 und 60 °C, insbesondere zwischen 45 und 55 °C, die Polymerisationstemperatur noch spezieller etwa 50 °C ist.

7. Zusammensetzung zur Herstellung von halbfertigen Verbundprodukten, umfassend ein Epoxidharz und ein Substrat, wie ein Prepreg-Material, syntaktische Schäume, Formmassen, synthetische Marmore, wobei die Zusammensetzung Folgendes beinhaltet:
― ein Basisepoxidharz;
― ein Anhydrid-Vernetzungsmittel, das konfiguriert ist, um mit dem Basisepoxidharz zu reagieren, um ein vernetztes Epoxidharz zu bilden;
― eine Menge an Titandioxid;
― eine Menge eines radikalisch polymerisierbaren ungesättigten Reagens, das zumindest eine Vinylungesättigtheit aufweist;
― einen Epoxidharzkatalysator, wobei der Epoxidharzkatalysator konfiguriert ist, um eine Reaktion zwischen dem Basisepoxidharz und dem Anhydrid-Vernetzungsmittel zu katalysieren,
wobei die Menge an Titandioxid kleiner als 16 Gewichts-% in Bezug auf das Gesamtgewicht der Zusammensetzung ist,
wobei das radikalisch polymerisierbare ungesättigte Reagens konfiguriert ist, sodass durch Mischen der Zusammensetzung mit einem Substrat ausgewählt aus einer Vielzahl von Verstärkungsfasern und einer Masse von Füllstoffen bei einer radikalischen Polymerisationstemperatur das halbfertige Produkt erhalten wird, welches das Substrat und die Zusammensetzung in einem Gelzustand umfasst.

8. Zusammensetzung nach Anspruch 7, wobei die Menge an Titandioxid eingestellt ist zwischen 8 und 14 Gewichts-% in Bezug auf das Gesamtgewicht der Zusammensetzung,
insbesondere die Menge an Titandioxid etwa 10 % des Gesamtgewichts der Zusammensetzung ist.

9. Zusammensetzung nach Anspruch 7, wobei das radikalisch polymerisierbare ungesättigte Reagens eine Verbindung ist, die nur eine Ungesättigtheit aufweist und die aus den Estern von Acrylsäure und/oder Methacrylsäure ausgewählt ist.

10. Zusammensetzung nach Anspruch 7, wobei das radikalisch polymerisierbare ungesättigte Reagens ausgewählt ist aus der Gruppe bestehend aus:
- Methylmethacrylat;
- Ethylmethacrylat;
- Butylmethacrylat;
- Benzylmethacrylat
- 1,4-Butandiolmethacrylat;
- Methylacrylat;
- Glycidylacrylat;
- 2-(2-Ethoxyethoxy)ethylacrylat;
- einer Kombination davon.

11. Zusammensetzung nach Anspruch 7, wobei das radikalisch polymerisierbare ungesättigte Reagens eine Verbindung ist, die zwei Ungesättigtheiten aufweist und ausgewählt ist aus der Gruppe bestehend aus:
- Divinylbenzol;
- Divinylethern;
- Triethylenglycoldivinylether;
- Bisphenol-A-Ethoxylatdiacrylat;
- 1,4-Cyclohexandimethanoldivinylether;
- Divinylbenzoldiacrylaten, erhalten durch eine Reaktion einer Acrylsäure mit einem Diamin oder durch eine Reaktion einer Acrylsäure, die Epoxid- oder Amin-reaktive Gruppen enthält;
- einer Kombination davon.

12. Zusammensetzung nach Anspruch 7, wobei das radikalisch polymerisierbare ungesättigte Reagens Styrol und ein Divinylbenzol in einem vorbestimmten Verhältnis umfasst, wobei das Divinylbenzol konfiguriert ist, um mit Styrol in einer Copolymerisationsreaktion zu reagieren.

13. Zusammensetzung nach Anspruch 7, wobei das Basisepoxidharz ausgewählt ist aus der Gruppe bestehend aus:
- Bisphenol A - Diglycidylether;
- Bisphenol F - Diglycidylether;
- Novolakdiglycidylethern mit niedrigem Molekulargewicht;
- Tetrahydrobisphenol A - Diglycidylether;
- Tetrabrombisphenol A - Diglycidylether;
- Vinylcyclohexandioxid;
- bis-(2,3-Epoxidcyclopentylether);
- einem Diglycidylester von Hexahydrophthalsäure;
- einem Epoxidharz, das zwei Epoxidgruppen aufweist;
- einer Mischung davon.

14. Zusammensetzung nach Anspruch 7, wobei das Anhydrid-Vernetzungsmittel ausgewählt ist aus der Gruppe bestehend aus:
- α-Methylphthalsäureanhydrid;
- α-Methyltetrahydrophthalsäureanhydrid;
- Methylnadinsäureanhydrid;
- einer Kombination der vorstehenden Anhydride.

15. Zusammensetzung nach Anspruch 14, wobei ein weiteres Anhydrid-Vernetzungsmittel bereitgestellt ist, ausgewählt aus der Gruppe bestehend aus:
- Phthalsäureanhydrid;
- Tetrahydrophthalsäureanhydrid;
- Hexachlorendomethylentetrahydrophthalsäureanhydrid;
- Pyromellithsäureanhydrid.

## Revendications

1. Procédé de préparation de produits semi-finis composites comprenant une résine époxy et un substrat, tels que des préimprégnés, des mousses syntactiques, des composés de moulage, des marbres synthétiques, ledit procédé comprenant les étapes de :
- prédisposition d'un récipient ;
- alimentation d'une résine époxy de base dans ledit récipient ;
- alimentation dans ledit récipient d'un agent de réticulation anhydride conçu pour réagir avec ladite résine époxy de base pour former une résine époxy réticulée ;
- alimentation d'une quantité de dioxyde de titane dans ledit récipient ;
- alimentation d'une quantité d'un réactif insaturé polymérisable par voie radicalaire comportant au moins une insaturation vinyle dans ledit récipient ;
- alimentation d'un catalyseur de résine époxy dans ledit récipient, ledit catalyseur de résine époxy étant conçu pour catalyser une réaction entre ladite résine époxy de base et ledit agent de réticulation anhydride,
de façon à former une composition basée sur ladite résine époxy de base dans ledit récipient, ladite quantité de dioxyde de titane étant plus petite que 16 % en poids par rapport au poids total de ladite composition,
ledit procédé comprenant les étapes ultérieures de :
- mise en contact de ladite composition avec un substrat choisi entre une pluralité de fibres de renforcement et une masse de charges, et
- chauffage de ladite composition jusqu'à une température de polymérisation de radicaux dudit réactif insaturé polymérisable par voie radicalaire, grâce auquel une étape de polymérisation de radicaux dudit réactif insaturé polymérisable par voie radicalaire se produit, de façon à stabiliser ladite composition en un produit semi-fini comprenant ledit substrat et ladite composition dans un état de gel.

2. Procédé selon la revendication 1, ledit réactif insaturé polymérisable par voie radicalaire comprenant un composé acrylique et un éther divinylique dans un rapport prédéfini, et ladite étape de polymérisation de radicaux comprenant une étape de réaction de copolymérisation dudit éther divinylique avec ledit composé acrylique,
en particulier ledit éther divinylique comprenant de l'éther divinylique de triéthylène glycol.

3. Procédé selon la revendication 1, ledit réactif insaturé polymérisable par voie radicalaire comprenant du styrène et un divinylbenzène dans un rapport prédéfini, et ladite étape de polymérisation de radicaux comprenant une étape de réaction de copolymérisation dudit divinylbenzène avec ledit styrène.

4. Procédé selon la revendication 1, ladite résine époxy étant le bisphénol A - éther diglycidylique, ledit agent de réticulation anhydride comprenant de l'anhydride méthylnadique et ledit réactif insaturé polymérisable par voie radicalaire étant obtenu par une réaction de l'acrylate de glycidyle avec de l'éthylènediamine.

5. Procédé selon la revendication 1, avant ladite étape de mise en contact, une étape de transfert d'une partie de ladite composition dans un récipient étant fournie dans lequel ladite composition est mise en contact avec ledit substrat,
en particulier ledit récipient dans lequel ledit contact est provoqué étant une cuve d'imprégnation, et une étape d'alimentation d'un mat de fibres de renforcement en provoquant son déplacement à travers ladite composition étant fournie, de façon à obtenir ledit produit semi-fini sous la forme d'un mat préimprégné, c.-à-d. d'un préimprégné stabilisé.

6. Procédé selon la revendication 1, ladite température de polymérisation de radicaux étant fixée entre 40°C et 75°C, en particulier entre 40 et 60°C, plus particulièrement entre 45 et 55°C, encore plus particulièrement ladite température de polymérisation de radicaux étant d'environ 50°C.

7. Composition permettant la préparation de produits semi-finis composites comprenant une résine époxy et un substrat, tels qu'un matériau préimprégné, des mousses syntactiques, des composés de moulage, des marbres synthétiques, ladite composition comportant :
- une résine époxy de base ;
- un agent de réticulation anhydride conçu pour réagir avec ladite résine époxy de base de façon à former une résine époxy réticulé ;
- une quantité de dioxyde de titane ;
- une quantité de réactif insaturé polymérisable par voie radicalaire comportant au moins une insaturation vinyle ;
- un catalyseur de résine époxy, ledit catalyseur de résine époxy étant conçu pour catalyser
une réaction entre ladite résine époxy de base et ledit agent de réticulation anhydride, ladite quantité de dioxyde de titane étant plus petite que 16 % en poids par rapport au poids total de ladite composition,
ledit réactif insaturé polymérisable par voie radicalaire étant conçu de telle sorte que, en mélangeant ladite composition à un substrat choisi entre une pluralité de fibres de renforcement et une masse de charges à une température de polymérisation de radicaux, ledit produit semi-fini comprenant ledit substrat et ladite composition dans un état de gel étant obtenu.

8. Composition selon la revendication 7, ladite quantité de dioxyde de titane étant fixée entre 8 % et 14 % en poids par rapport au poids total de ladite composition,
en particulier ladite quantité de dioxyde de titane représentant environ 10 % du poids total de ladite composition.

9. Composition selon la revendication 7, ledit réactif insaturé polymérisable par voie radicalaire étant un composé qui comporte une seule saturation et qui est choisi parmi les esters d'acide acrylique et/ou d'acide méthacrylique.

10. Composition selon la revendication 7, ledit réactif insaturé polymérisable par voie radicalaire étant choisi dans le groupe constitué par :
- le méthacrylate de méthyle ;
- le méthacrylate d'éthyle ;
- le méthacrylate de butyle ;
- le méthacrylate de benzyle ;
- le méthacrylate de 1,4-butanediol ;
- l'acrylate de méthyle ;
- l'acrylate de glycidyle ;
- l'acrylate de 2-(2-éthoxyéthoxy)éthyle ;
- une combinaison de ceux-ci.

11. Composition selon la revendication 7, ledit réactif insaturé polymérisable par voie radicalaire étant un composé qui comporte deux insaturations et étant choisi dans le groupe constitué par :
- le divinylbenzène ;
- les éthers divinyliques ;
- l'éther divinylique de triéthylène glycol ;
- le diacrylate d'éthoxylate de bisphénol A ;
- l'éther divinylique de 1,4-cyclohexanediméthanol ;
- les diacrylates de divinylbenzène obtenus par une réaction d'un acide acrylique avec une diamine ou par une réaction d'un époxy contenant de l'acide acrylique ou de groupes réactifs aux amines ;
- une combinaison de ceux-ci.

12. Composition selon la revendication 7, ledit réactif insaturé polymérisable par voie radicalaire comprenant du styrène et un divinylbenzène dans un rapport prédéfini, ledit divinylbenzène étant conçu pour réagir avec le styrène dans une réaction de copolymérisation.

13. Composition selon la revendication 7, ladite résine époxy de base étant choisie dans le groupe constitué par :
- le bisphénol A - éther diglycidylique ;
- le bisphénol F - éther diglycidylique ;
- les éthers diglycidyliques novalac de faible poids moléculaire ;
- le tétrahydrobisphénol A - éther diglycidylique ;
- le tétrabromobisphénol A - éther diglycidylique ;
- le vinylcyclohexanedioxyde ;
- le bis-(éther 2,3-époxy cyclopentylique) ;
- l'ester diglycidylique de l'acide hexahydrophtalique ;
- une résine époxy comportant deux groupes époxy ;
- un mélange de ceux-ci.

14. Composition selon la revendication 7, ledit agent de réticulation anhydride étant choisi dans le groupe constitué par :
- l'anhydride α-méthylphtalique ;
- l'anhydride α-méthyltétrahydrophtalique ;
- l'anhydride méthylnadique ;
- une combinaison des anhydrides précédents.

15. Composition selon la revendication 14, un agent de réticulation anhydride supplémentaire étant fourni choisi dans le groupe constitué par :
- l'anhydride phtalique ;
- l'anhydride tétrahydrophtalique ;
- l'anhydride hexachloroendométhylènetétrahydrophtalique ;
- l'anhydride pyromellitique.
